# EUROPÄISCHE PATENTSCHRIFT

(11) **EP 4 264 050 B1**
(45) Veröffentlichungstag und Bekanntmachung des Hinweises auf die Patenterteilung: **29.01.2025**
(21) Anmeldenummer: 21839839.4
(22) Anmeldetag: 14.12.2021
(51) Int. Cl.: F04B 39/00, F04B 39/04, F04B 37/12, F16J 9/22, F16J 15/00, F16J 15/16, F16J 15/26, F16J 15/56

(54) **KOMPRESSOR**
COMPRESSOR
COMPRESSEUR

(30) Priorität: 21.12.2020 DE 102020134381
(43) Veröffentlichungstag der Anmeldung: 25.10.2023
(73) Patentinhaber: STASSKOL GmbH, 39418 Stassfurt (DE); NEUMAN & ESSER GmbH & Co. KG, 52531 Übach-Palenberg (DE)
(72) Erfinder: HOFF, Klaus Hubert, 52074 Aachen (DE); MORAWA, Uwe, 39171 Langenweddingen (DE); LANGELA, Marc, 39439 Güsten (DE)
(74) Vertreter: WSL Patentanwälte Partnerschaft mbB
(86) Internationale Anmeldenummer: PCT/EP2021/085597
(87) Internationale Veröffentlichungsnummer: WO 2022/136014

(56) Entgegenhaltungen:
- DE-A1- 102010 034 870
- DE-U1- 9 190 040
- JP-A- S6 088 844
- KR-A- 20010 065 988
- KR-A- 20090 108 925
- KR-B1- 100 559 537
- US-A- 3 544 118

## Beschreibung

Die vorliegende Erfindung betrifft einen Kompressor.

Kolbenkompressoren umfassen regelmäßig einen Kolben mit einer sich an den Kolben anschließenden Kolbenstange. Der Kolben oszilliert in einer Laufbuchse und umfasst in der Regel mehrere Kolbenringe als Dichtungen, welche die Hochdruckseite, also den Verdichtungsraum, von der Niederdruckseite, also dort, wo die Kolbenstange beginnt, abdichten.

Auch an der Kolbenstange ist in der Regel eine Abdichtung in Form einer Kolbenstangenpackung angeordnet. Die Kolbenstangenpackung umfasst mehrere Kammerscheiben, die axial aneinander anliegen und Kammern bilden, innerhalb derer Dichtungen mit einem oder mehreren Dichtringen angeordnet sind. Die Dichtringe dichten ebenfalls eine Hochdruckseite, auf welcher sich der Kolben befindet, von einer Niederdruckseite, auf welcher sich der Kompressorantrieb befindet, ab.

Eine Dichtungspackung für Kolbenstangen ist aus der US 3,544,118 bekannt. Die DE 91 90 040 U1 und die DE 10 2010 034 870 A1 offenbaren Dichtungen aus dem Bereich der Brennkraftmaschinen. Die KR 10 2009 0108925 A offenbart einen Kolben für einen Gaskompressor. Die JP S60-88844 A und die KR 2001 0065988 A offenbaren jeweils eine Dichtung für einen Verbrennungsmotor.

Kolbenkompressoren können eingesetzt werden, um Wasserstoff zu verdichten. Eine Verdichtung von Wasserstoff ist beispielsweise für Wasserstofftankstellen notwendig. Die dort notwendigen Drücke können beispielsweise 400 bar für Busse und 900 bar für Pkw betragen.

Beim Betanken ist die Reinheit des Wasserstoffs von besonders großer Bedeutung. Der Einsatz von Schmierstoffen kann den Wasserstoff verunreinigen, was unerwünscht ist. Bevorzugt sollen daher ungeschmierte Kolbenkompressoren zum Einsatz kommen (Trockenlauf ohne Schmierstoffe).

Die hohen Druckdifferenzen und der Trockenlauf führen allerdings zu einem sehr hohen Verschleiß. Dies gilt sowohl für die an dem Kolben angeordneten Kolbenringe als auch für die Dichtringe innerhalb der Kolbenstangendichtungen. Die für Dichtungen verwendeten Werkstoffe haben ein sogenanntes pv-Limit. Bei hohen Druckdifferenzen (p) und/oder hohen Geschwindigkeiten (v) existiert eine Grenze, ab welcher der Verschleiß überproportional zunimmt. Diese Grenze zu erreichen oder zu überschreiten, ist daher unerwünscht.

Bei den hohen Druckdifferenzen im Bereich der Wasserstoffbetankung ist somit die Geschwindigkeit des Kolbens begrenzt, was zu langen Betankungszeiten führt.

Aufgabe der Erfindung war es, eine Möglichkeit zu schaffen, eine Verdichtung von Gasen mit hohen Druckdifferenzen und hohen Geschwindigkeiten zu ermöglichen.

Die Aufgabe wird durch einen Kompressor gemäß Anspruch 1 gelöst.

Der Kompressor umfasst einen stationären Teil und einen entlang einer Hauptachse oszillierenden Teil sowie einen zwischen dem stationären Teil und dem oszillierenden Teil in axialer Richtung verlaufenden Leckageweg. Zwischen dem stationären Teil und dem oszillierenden Teil sind mehrere axial hintereinander angeordnete, ringförmig um die Hauptachse verlaufende Kammern definiert. In zumindest einer Kammer ist eine Dichtung angeordnet, die den Leckageweg verschließt oder verkleinert, also eine Leckage entlang des Leckagewegs verringert oder verhindert. Der Kompressor ist dadurch gekennzeichnet, dass zumindest ein Bypass vorgesehen ist, der zwei Kammern fluidisch miteinander verbindet.

Der Kompressor ist insbesondere ein Kolbenkompressor.

Der Leckageweg ist grundsätzlich vorhanden, da sich das stationäre und das oszillierende Teil nicht berühren. Durch die Dichtungen wird die Leckage entlang des Leckagewegs verringert, wobei der Fokus der Entwicklung bisher darauf lag, die Leckage immer weiter zu verringern. Bei konventionellen Kolbenstangendichtungen finden ausgehend von der Hochdruckseite der Abbau des dynamischen Druckanteils hauptsächlich an der ersten Dichtung und der Abbau des statischen Druckanteils hauptsächlich an der letzten Dichtung statt. Ähnlich verhält es sich bei den Kolbenringen an einem Kolben. Die erste und die letzte Dichtung sind also der größten Belastung ausgesetzt.

Die Erfinder haben erkannt, dass es insbesondere bei hohen Druckdifferenzen zielführend ist, die über eine Dichtungsanordnung, also eine Anordnung mehrerer Dichtungen in mehreren axial hintereinander angeordneten Kammern, anliegende Druckdifferenz (Differenz zwischen Hochdruckseite und Niederdruckseite) homogener über die einzelnen Dichtungen zu verteilen. Dadurch wird die Druckdifferenz pro Dichtung (Druckdifferenz vor und hinter der Dichtung) bei der ersten und der letzten Dichtung reduziert. In Folge dessen kann der Kompressor so ausgelegt werden, dass bei bestimmungsgemäßem Gebrauch an keiner der Dichtungen das pv-Limit erreicht wird. Bei der Erfindung wird also der Leckageweg selbst weiterhin so gut wie möglich verschlossen und gleichzeitig wird ein im Rahmen der Auslegung konkret festgelegter Bypass vorgesehen, der eine vordefinierte Leckage erlaubt.

Die homogene Druckverteilung wird somit durch eine gezielte Leckage über den Bypass bzw. die Bypässe zwischen den einzelnen Kammern des Kompressors erreicht. Die Bypässe werden derart ausgelegt, dass sich eine homogene Druckverteilung über die Dichtungsanordnung einstellt.

Die Erfindung lässt sich sowohl für die Dichtungsanordnung an einem Kolben eines Kompressors wie auch in einer Kolbenstangenpackung eines Kompressors einsetzen. Das stationäre Teil kann demnach eine Laufbuchse und das oszillierende Teil ein Kolben sein. Alternativ kann das stationäre Teil ein Packungsgehäuse und das oszillierende Teil eine Kolbenstange sein.

Für eine homogene Druckverteilung ist es sinnvoll, wenn der Bypass zwei unmittelbar benachbarte Kammern fluidisch miteinander verbindet. Dadurch findet jeweils eine Leckage zwischen den benachbarten Kammern statt, wodurch die Druckdifferenz gleichmäßig über alle Dichtungen verteilt wird.

Da eine Leckage eigentlich unerwünscht ist, wird durch den Bypass nur gerade so viel Leckage zugelassen, wie zum vorgegebenen, teilweisen Druckausgleich notwendig ist. Die Leckage durch den Bypass wird insbesondere von dessen Minimalquerschnitt, also dem Querschnitt an dessen engster Stelle, definiert. Es hat sich gezeigt, dass ein Minimalquerschnitt M < 2 mm², insbesondere M < 1,5 mm² zielführend ist, insbesondere im Anwendungsbereich von Druckdifferenzen > 300 bar. Der Minimalquerschnitt ist bevorzugt M > 0,1 mm².

Bypässe können in dem stationären Teil, insbesondere dem Packungsgehäuse, oder dem oszillierenden Teil, insbesondere dem Kolben, oder aber in den Dichtungen vorgesehen werden. In den Dichtungen ist insbesondere das Einbringen von Bohrungen und/oder Ausfräsungen in den Dichtringen oder in Stützringen denkbar, welche eine gezielte Leckage zwischen den Kammern ermöglichen. Wie oben erwähnt wurde, ist es bevorzugt, dass die Bohrung/Ausfräsung nicht im Bereich des Leckagewegs angeordnet ist. Wird eine Dichtung mit einem Bypass versehen, so wird die Dichtung bevorzugt aus einem steifen Material (z. B. Kunststoffe mit einem E-Modul > 5000 MPa und/oder Metalle) gebildet, um die gezielte Leckage zu erreichen.

Der Bypass ist insbesondere zusätzlich zu dem Leckageweg vorgesehen. Das bedeutet, dass der Bypass an einer Stelle vorgesehen ist, an welcher kein Abschnitt des Leckagewegs gebildet wird. An einem Dichtring beispielsweise wird ein Abschnitt des Leckagewegs an der radialen Dichtfläche gebildet, da es dort zu einer geringen Leckage kommen kann. In einem solchen Fall könnte der Bypass beispielsweise bevorzugt quer durch den Dichtring erfolgen, nicht aber im Bereich der Dichtfläche.

Der Bypass wird bevorzugt von zumindest einer Bohrung gebildet. Eine Bohrung lässt sich präzise hinsichtlich ihrer Größe einstellen, sodass es grundsätzlich möglich ist, den Minimalquerschnitt und damit die Leckage alleine durch den Durchmesser der Bohrung zu definieren. Gleichzeitig ist eine Bohrung vergleichsweise einfach herzustellen, sodass die Herstellungskosten des Kompressors nicht wesentlich ansteigen. Eine einzige Bohrung kann grundsätzlich auch in mehreren Bohrvorgängen gebildet werden und dann beispielsweise einen Knick aufweisen. Eine Bohrung muss also nicht zwingend gerade sein.

Der Kolben kann entweder ein sogenannter gebauter Kolben oder ein Kolben mit einem einteiligen Kolbenkörper sein. Ein gebauter Kolben weist mehrere Scheibenkörper in Form von Kolbenscheiben auf, die in axialer Richtung hintereinander angeordnet sind und gemeinsam, optional ergänzt um weitere Scheibenkörper, den Kolbenkörper bilden. Der Kolbenkörper weist sowohl in einteiliger wie auch in gebauter Form bevorzugt einen zylindrischen Kern und eine Mehrzahl von ringförmigen, umfänglich um den Kern verlaufenden Vorsprüngen auf, zwischen denen radial nach außen gerichtete Nuten für die Dichtungen ausgebildet werden. Die Nuten werden von der Laufbuchse teilweise verschlossen, wobei verbleibende Lücken Abschnitte des Leckagewegs bilden. Die Nuten bilden dadurch gemeinsam mit der Laufbuchse die Kammern für die Dichtungen.

Die Kolbenstangenpackung ist grundsätzlich "gebaut" und weist dann mehrere Scheibenkörper in Form von Kammerscheiben auf, die in axialer Richtung hintereinander angeordnet sind, jeweils eine Zentralbohrung aufweisen und das Packungsgehäuse bilden, durch welches die Kolbenstange verläuft. Die Kammerscheiben bilden mehrere radial nach innen gerichtete Nuten, die von der Kolbenstange teilweise verschlossen werden, wobei erneut die verbleibenden Lücken Abschnitte des Leckagewegs bilden. Die Nuten bilden hier gemeinsam mit der Umfangsfläche der Kolbenstange die Kammern für die Dichtungen.

Die Scheibenkörper können miteinander verschraubt werden.

Bei vorteilhaften Weiterbildungen weist demnach der Kolben oder das Packungsgehäuse mehrere Scheibenkörper auf, die in axialer Richtung hintereinander angeordnet sind, wobei die Scheibenkörper eine erste Axialfläche und eine bezüglich des Scheibenkörpers gegenüberliegend angeordnete zweite Axialfläche sowie eine Radialfläche aufweisen und wobei die Bohrung zwischen der ersten Axialfläche und der Radialfläche und/oder zwischen der ersten Axialfläche und der zweiten Axialfläche verläuft. Die Radialfläche ist im Falle des Packungsgehäuses eine innere Radialfläche oder im Falle des Kolbens eine äußere Radialfläche. Die Radialfläche kann auch der Nutgrund der gebildeten Nuten sein, der dann kann auch als Kammergrund der gebildeten Kammern bezeichnet werden kann.

Es können auch mehrere Bohrungen vorgesehen sein, die sich in unterschiedlichen Bauteilen befinden.

Die Bohrung verläuft, insbesondere im Falle von Dichtungen und Scheibenkörpern, bevorzugt zumindest abschnittsweise parallel zu der Hauptachse. Dies vereinfacht die Herstellung der Bohrung.

Weist der Kolben einen zylindrischen Kern und eine Mehrzahl von ringförmigen, umfänglich um den Kern verlaufenden Vorsprüngen auf, so verläuft die Bohrung bevorzugt zumindest abschnittsweise durch den Kern. Auf diese Weise lassen sich beispielsweise zwei Nutgrunde benachbarter Kammern miteinander verbinden, indem quer durch den Kern gebohrt wird. Die Bohrung verläuft besonders bevorzugt durch das Zentrum des Kolbens, sie kreuzt also die Hauptachse.

Bei manchen Ausführungsformen wird der Bypass direkt im Bereich des Leckagewegs vorgesehen, insbesondere in Form einer Nut. Derartige Bypässe können insbesondere in den Scheibenkörpern, vorgesehen werden, besonders bevorzugt im Bereich einer Dichtfläche. Die Dichtfläche ist dann bevorzugt eben und der Bypass eine Nut. Die dazugehörige Dichtfläche der Dichtung ist bevorzugt ebenfalls eben. Die Dichtflächen/n erstrecken sich bevorzugt senkrecht zur Hauptachse. Die Nut verläuft bevorzugt senkrecht zur Hauptachse. Wird, wie oben beschrieben, eine Ausfräsung in der Dichtung vorgesehen, dann führt fortschreitender Verschleiß der Dichtung dazu, dass der Bypass nach und nach kleiner wird. Eine Nut in dem weniger verschleißenden Dichtpartner (dem Scheibenkörper) wird mit der Zeit nicht oder nur sehr geringfügig kleiner. Ein Bypass in dem Scheibenkörper im Bereich des Leckagewegs, insbesondere in der Dichtfläche, behält somit über einen langen Zeitraum seinen vordefinierten Querschnitt. Die Nut stellt somit eine bevorzugte Ausführungsform eines Bypass dar.

Der angestrebte Minimalquerschnitt des Bypasses ist sehr gering. Eine Bohrung mit einem solchen Querschnitt zu fertigen ist insbesondere aufgrund des Verhältnisses ihrer Länge zu ihrem Durchmesser technisch anspruchsvoll. Bei vorteilhaften Weiterbildungen ist daher in der Bohrung oder in der Nut eine Drossel angeordnet, welche einen Minimalquerschnitt M des Bypass definiert. Die Bohrung selbst braucht in diesem Fall nicht besonders schmal zu sein und kann dann leichter hergestellt werden. Die Drossel erstreckt sich bevorzugt nicht über die gesamte Länge der Bohrung. Dadurch ergibt sich ein günstigeres Verhältnis von Länge zu Durchmesser einer in der Drossel vorhandenen Drosselbohrung, die sodann feinmechanisch leicht hergestellt werden kann. Besonders bevorzugt ist die Drossel eine Einschraubung mit Lochblende, welche in die Bohrung eingeschraubt ist, oder ein Einsatz mit Lochblende, der in die Nut eingesetzt ist. In einer Lochblende lässt sich ein Loch mit einem sehr geringen Querschnitt besonders einfach fertigen.

Die Drossel kann auch ein poröses Material umfassen. Das poröse Material und der Durchmesser der Bohrung oder der Querschnitt der Nut werden dann so ausgebildet, dass sich zusammen der gewünschte Minimalquerschnitt ergibt.

Je höher die Druckdifferenz zweier benachbarter Kammern ist, umso kleiner sollte der Bypass sein, da schon ein kleinerer Bypass bei höheren Druckdifferenzen für eine Druckangleichung ausreichend ist. Erfindungsgemäß sind daher mehrere Bypässe vorgesehen, wobei von jeweils zwei benachbarten Bypässen der Bypass, welcher näher an der Hochdruckseite des Kompressors angeordnet ist, einen Minimalquerschnitt M aufweist, der kleiner oder gleich dem Minimalquerschnitt M des Bypasses ist, welcher näher an einer Niederdruckseite des Kompressors angeordnet ist. Mit anderen Worten werden die Bypässe ausgehend von der Hochdruckseite in Richtung der Niederdruckseite größer oder bleiben zumindest gleich. Besonders bevorzugt sind die Bohrungen der Bypässe gleichartig und insbesondere identisch und die Unterschiede der Bypässe werden durch die jeweils eingesetzte Drossel erzielt. Insbesondere sind also die Drosseln unterschiedlich ausgestaltet und weisen insbesondere unterschiedliche Minimalquerschnitte auf.

Offenbart ist ferner ein Scheibenkörper, der zum Einsatz in einem Kompressor ausgebildet ist und eine erste Axialfläche, eine bezüglich des Scheibenkörpers gegenüberliegend angeordnete zweite Axialfläche sowie eine Radialfläche aufweist und der durch einen Bypass gekennzeichnet ist, der zwischen der ersten Axialfläche und der Radialfläche und/oder zwischen der ersten Axialfläche und der zweiten Axialfläche verläuft. Die Radialfläche ist insbesondere eine innere Radialfläche oder eine äußere Radialfläche. Der Bypass dieses Scheibenkörpers ist bevorzugt eine Bohrung.

Offenbart ist ferner ein Scheibenkörper, der zum Einsatz in einem Kompressor ausgebildet ist und eine innere Radialfläche und eine äußere Radialfläche aufweist, wobei ein Bypass zwischen der inneren Radialfläche und einer äußere Radialfläche verläuft. Der Bypass dieses Scheibenkörpers ist bevorzugt eine Nut.

Der Scheibenkörper kann ferner in der oben hinsichtlich des Kompressors beschriebenen Weise weitergebildet sein.

Offenbart ist ferner eine Dichtung, ausgebildet zum Einsatz in einem Kompressor, mit einer ersten axialen Endfläche, einer zweiten axialen Endfläche, einer radialen Innenfläche und einer radialen Außenfläche, die dadurch einen Bypass, der zwischen zumindest zwei der Flächen, also erster axialer Endfläche, zweiter axialer Endfläche, radialer Innenfläche und radialer Außenfläche, verläuft.

Die Dichtung kann ferner in der oben hinsichtlich des Kompressors beschriebenen Weise weitergebildet sein.

Offenbart ist ferner die Verwendung eines Scheibenkörpers oder einer Dichtung nach der obigen Beschreibung in einem Kompressor, bevorzugt einem Kolbenkompressor, insbesondere einem Kompressor nach der obigen Beschreibung.

Die Erfindung wird nachfolgend anhand der Zeichnungen beispielhaft dargestellt und erläutert. Es zeigt dabei:
- Figur 1: einen Ausschnitt einer ersten Ausführungsform eines Kompressors in einer Schnittansicht;
- Figur 2: einen Ausschnitt einer zweiten Ausführungsform eines Kompressors in einer Schnittansicht;
- Figur 3: einen Ausschnitt einer dritten Ausführungsform eines Kompressors in einer Schnittansicht;
- Figur 3A: das Detail A der Figur 3;
- Figur 4: einen Stützring für einen Kompressor in einer perspektivischen Ansicht;
- Figur 5: einen Ausschnitt einer vierten Ausführungsform eines Kompressors in einer Schnittansicht;
- Figur 6: ausschnittsweise einen Scheibenkörper in einer Perspektivansicht.

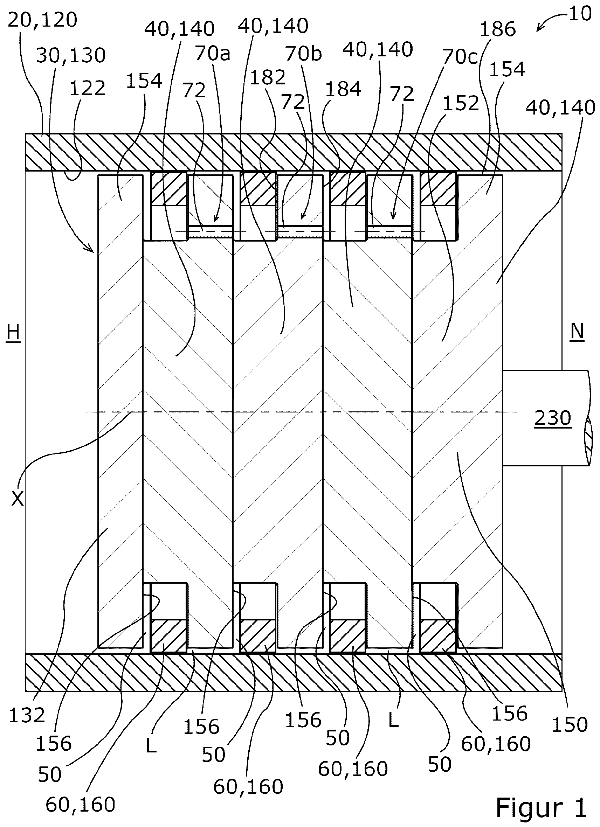

Der in Figur 1 ausschnittsweise dargestellte Kompressor 10 umfasst eine Laufbuchse 120 als stationäres Teil 20 und einen Kolben 130 als oszillierendes Teil 30. Der Kolben 130 oszilliert bei bestimmungsgemäßem Gebrauch entlang einer Hauptachse X relativ zu der Laufbuchse 120 zwischen einer Hochdruckseite H und einer Niederdruckseite N.

Die Laufbuchse 120 umfasst eine Gleitfläche 122, bei der es sich um eine innenliegende, zylindrische Umfangsfläche handelt.

Bei dem Kolben 130 handelt es sich um einen sogenannten gebauten Kolben 130. Der Kolben 130 umfasst mehrere Scheibenkörper 40, nämlich eine Grundplatte 132 und mehrere in axialer Richtung hintereinander angeordnete Kolbenscheiben 140. Der Kolben 130 ist mit einer Kolbenstange 230 verbunden. Die Kolbenscheiben 140 bilden gemeinsam mit der Grundplatte 132 einen Kolbenkörper 150. Der Kolbenkörper 150 weist einen zylindrischen Kern 152 und eine Mehrzahl von ringförmigen, umfänglich um den Kern 152 verlaufenden Vorsprüngen 154 auf. Zwischen den Vorsprüngen 154 wird eine Mehrzahl von Nuten 156 ausgebildet, wobei jede Nut 156 entweder von zwei Kolbenscheiben 140 oder von einer Kolbenscheibe 140 und der Grundplatte 132 gebildet wird. Die Nuten 156 werden von der Laufbuchse 120 teilweise verschlossen, wodurch der Kolbenkörper 150 gemeinsam mit der Laufbuchse 120 mehrere axial hintereinander angeordnete, ringförmig um die Hauptachse verlaufende Kammern 50 ausbildet. Die Laufbuchse 120 berührt den Kolbenkörper 150 dabei nicht. Dadurch verbleibt zwischen der Laufbuchse 120 und dem Kolben 130 ein in axialer Richtung verlaufender Leckageweg L.

Eine Leckage entlang des Leckagewegs L ist grundsätzlich unerwünscht, lässt sich aber in der Regel nicht vollständig vermeiden. Die Leckage kann aber minimiert werden. Hierzu ist in jeder Kammer 50 eine Dichtung 60 angeordnet, die den Leckageweg L verschließt oder verkleinert. Bei der dargestellten Ausführungsform handelt es sich bei den Dichtungen 60 um Kolbenringe 160, die hier vereinfacht dargestellt sind. Je nach dem, in welche Richtung sich der Kolben 130 zu einem bestimmten Zeitpunkt bewegt, liegen die Kolbenringe 160 entweder an der hochdruckseitigen oder der niederdruckseitigen Flanke der Nuten 156 an und dichten dort den Leckageweg L ab.

Bei konventionellen Dichtungsanordnungen mit Kolbenringen 160 findet ausgehend von der Hochdruckseite H der Abbau des dynamischen Druckanteils an der ersten Dichtung 60 und der Abbau des statischen Druckanteils an der letzten Dichtung 60 statt. Um dies zu vermeiden, sind zusätzlich zu dem Leckageweg L drei Bypässe 70a,b,c vorgesehen. Jeder Bypass 70a,b,c verbindet zwei unmittelbar benachbarte Kammern 50 fluidisch miteinander.

Die Bypässe 70a,b,c weisen jeweils eine Bohrung 72 auf, die parallel zur Hauptachse X verläuft. Bei der dargestellten Ausführungsform verlaufen die Bypässe 70a,b,c durch die Vorsprünge 154, also von einer ersten Axialfläche 182 der Kolbenscheibe 140 zu einer gegenüberliegenden zweiten Axialfläche 184 der Kolbenscheibe 140. Jede Bohrung 72 verbindet dadurch zwei benachbarte Kammern 50 miteinander. Die Bohrungen 72 sind tatsächlich von geringerem Durchmesser und hier vergrößert dargestellt. Jede Kolbenscheibe 140 umfasst ferner eine äußere Radialfläche 186.

Die Bypässe 70a,b,c bieten den von der Hochdruckseite kommenden Gasen zusätzlich zum Leckageweg L eine Möglichkeit, in die jeweils nächste Kammer 50 zu strömen. Auf diese Weise wird die Druckdifferenz zwischen Hochdruckseite H und Niederdruckseite N schrittweise und insgesamt homogen abgebaut.

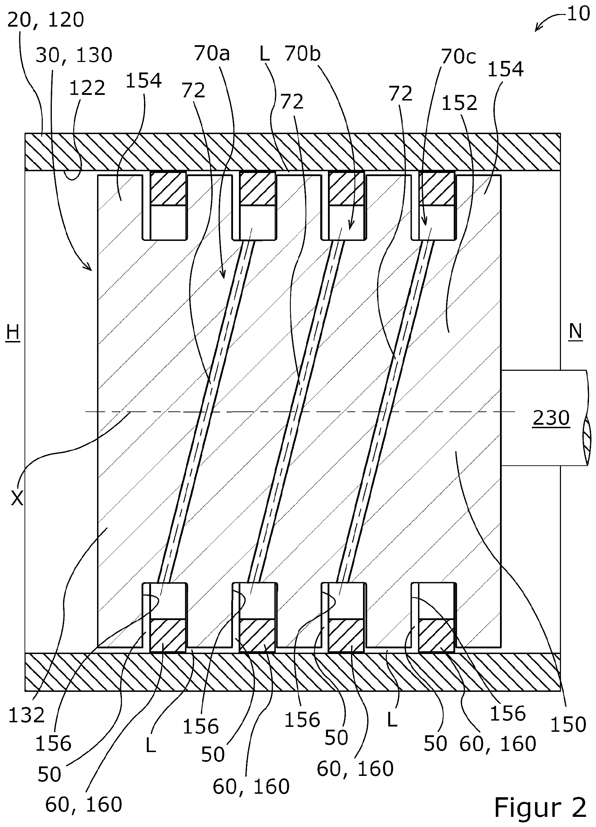

Bei der in Figur 2 ausschnittsweise dargestellten Ausführungsform weist der Kolben 30 einen einteiligen Kolbenkörper 150 auf. Der Kolbenkörper 150 umfasst auch hier einen zylindrischen Kern 152 und eine Mehrzahl von ringförmigen, umfänglich um den Kern 152 verlaufenden Vorsprüngen 154. Die Ausführung der Laufbuchse 20, der Kolbenstange 230 und der Dichtungen 60 ist identisch zur Ausführungsform gemäß Figur 1.

Die Bypässe 70a,b,c werden auch bei der Ausführungsform gemäß Figur 2 durch Bohrungen 72 gebildet. Die Bohrungen 72 verlaufen jedoch nicht parallel zu der Hauptachse X. Vielmehr verlaufen die Bohrungen 72 von dem Nutgrund einer Nut 156 auf geraden Weg zu dem Nutgrund der benachbarten Nut 156. Die Bohrungen 72 verlaufen vollständig durch den Kern 152 des Kolbenkörpers 150. Dabei kreuzen die Bohrungen die Hauptachse X. Benachbarte Kammern 50 sind somit auch bei dieser Ausführungsform durch die Bohrungen 72 miteinander verbunden, sodass eine homogene Druckverteilung über alle Dichtungen 60 erfolgt.

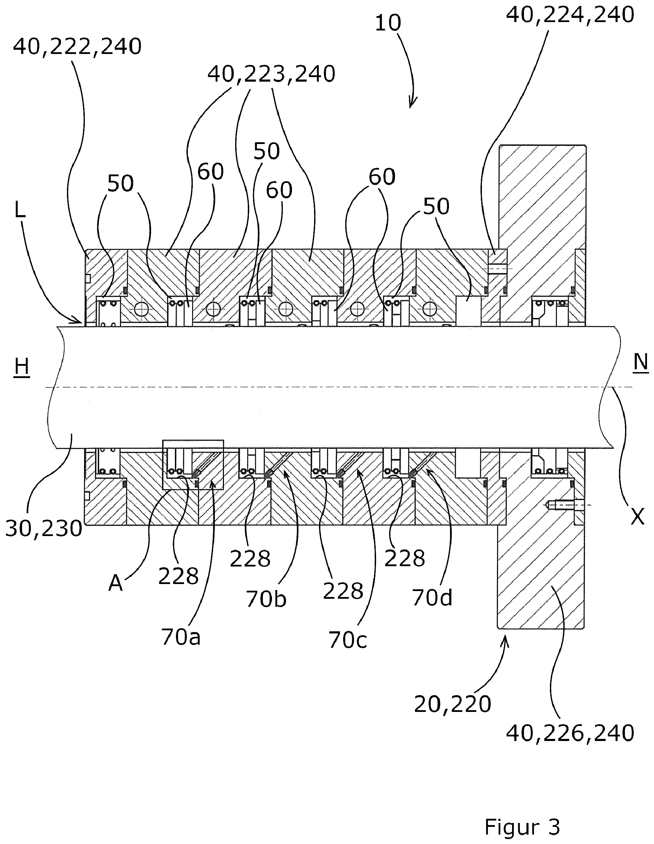

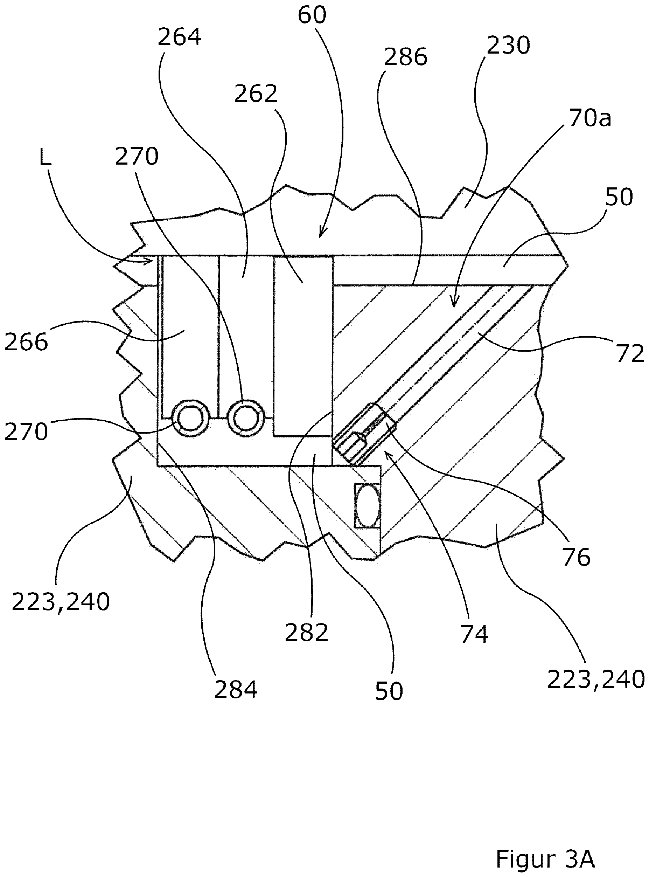

Die Figur 3 zeigt ausschnittsweise einen Kompressor 10 mit einem Packungsgehäuse 220 als stationäres Teil 20 und einer Kolbenstange 230 als oszillierendes Teil 30. Die Kolbenstange 230 oszilliert relativ zu dem Packungsgehäuse 220 entlang einer Hauptachse X zwischen einer Hochdruckseite H und einer Niederdruckseite N.

Das Packungsgehäuse 220 umfasst mehrere Kammerscheiben 240 als Scheibenkörper 40, nämlich eine Grundplatte 222, mehrere Hauptkammerscheiben 223, eine Deckplatte 224 und eine Abschlussplatte 226, die in dieser Reihenfolge entlang der Hauptachse X aneinander angeordnet sind. Die Kammerscheiben 240 weisen jeweils eine Zentralbohrung auf. Die Kolbenstange 230 verläuft durch die Zentralbohrungen. Jeweils zwei benachbarte Kammerscheiben 240 bilden gemeinsam eine Nut 228, die radial nach innen offen ist.

Die Nuten 228 der Kammerscheiben 240 werden teilweise von der Kolbenstange 230 verschlossen. Auf diese Weise bilden die Kammerscheiben 240 und die Kolbenstange 230 mehrere axial hintereinander angeordnete, ringförmig um die Hauptachse verlaufende Kammern 50 aus, wobei zwischen Kammerscheiben 240 und Kolbenstange 230 ein Leckageweg L verbleibt.

Die Kammerscheiben 240 weisen jeweils eine erste Axialfläche 282 und einer bezüglich der Kolbenscheibe 240 gegenüberliegend angeordnete zweite Axialfläche 284 sowie eine innere Radialfläche 286 auf (siehe Figur 3A).

In vier der Kammern 50 ist jeweils eine Dichtung 60 angeordnet. Die Dichtungen 60 umfassen jeweils einen Stützring 262, einen Dichtring 264 und einen Deckring 266 (siehe Figur 3A). Der Dichtring 264 und der Deckring 266 werden von Schlauchfedern 270 auf der Kolbenstange 230 gehalten. Bei anderen Ausführungsformen können die Dichtungen 60 auch anders aufgebaut sein und mehr oder weniger Ringe umfassen. Der Stützring 262 berührt die Kolbenstange 230 bei bestimmungsgemäßem Gebrauch nicht, sondern ist zu der Kolbenstange 230 radial beabstandet angeordnet. Durch den von der Hochdruckseite H kommenden Druck wird die Dichtung 60 gegen die Kammerscheibe 240 gedrückt, welche sich näher an der Niederdruckseite N befindet. Der Stützring 262 stützt die Dichtung 60 in axialer Richtung an der Kammerscheibe 240 ab.

Der Dichtring 264 liegt an der Kolbenstange 230 an und dichtet somit an dem Leckageweg L ab, er verschließt also den Leckageweg L vollständig oder teilweise.

Zusätzlich zu dem Leckageweg L sind vier Bypässe 70a,b,c,d vorgesehen, die jeweils zwei benachbarte Kammern 50 fluidisch miteinander verbinden (siehe Figur 3). Die Bypässe 70a,b,c,d werden von Bohrungen 72 gebildet (siehe Figur 3A). Die Bohrungen 72 verlaufen zwischen der ersten Axialfläche 282 und der inneren Radialfläche 286 und verbinden dadurch die angrenzenden Kammern 50.

In den Bohrungen 72 ist jeweils eine Drossel 74 in Form einer Einschraubung mit einer Lochblende 76 angeordnet, welche in die Bohrung 72 eingeschraubt ist. Die Lochblende 76 weist ein Loch auf, welches den Minimalquerschnitt des jeweiligen Bypass 70a,b,c,d definiert. Von der Hochdruckseite H kommend weisen die Löcher der Lochblenden 76 der Bypässe 70a,b,c,d einen Durchmesser von 0,4 mm, 0,4 mm, 0,5 mm und 0,6 mm auf. Der Minimalquerschnitt von Bypass 70a,b,c,d zu Bypass 70a,b,c,d wird also in Richtung der Hochdruckseite H immer geringer oder bleibt gleich.

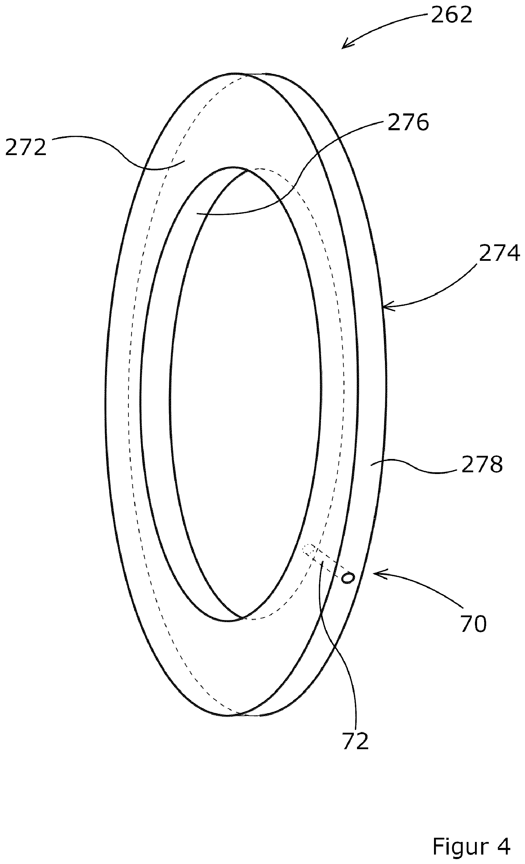

Der in Figur 4 dargestellt Stützring 262 kann beispielsweise in einem Kolbengehäuse 220 gemäß Figur 3 eingesetzt werden. Der Stützring 262 umfasst eine erste axiale Endfläche 272, eine gegenüberliegende zweite axiale Endfläche 274, eine radiale Innenfläche 276 und eine radiale Außenfläche 278.

Der Stützring 262 umfasst ferner einen Bypass 70 in Form einer Bohrung 72. Die Bohrung 72 verläuft in radialer Richtung von der radialen Innenfläche 276 zu der radialen Außenfläche 278. Bei bestimmungsgemäßem Gebrauch liegt der Stützring 262 wie oben erwähnt nicht mit seiner radialen Innenfläche 276 an der Kolbenstange 230 an. Auch liegt der Stützring 262 nicht mit der radialen Außenfläche 278 an dem Packungsgehäuse 220 an. Auf diese Weise verbindet auch der Bypass 70 des Stützrings 262 zwei benachbarte Kammern 50 (vgl. Figur 3A).

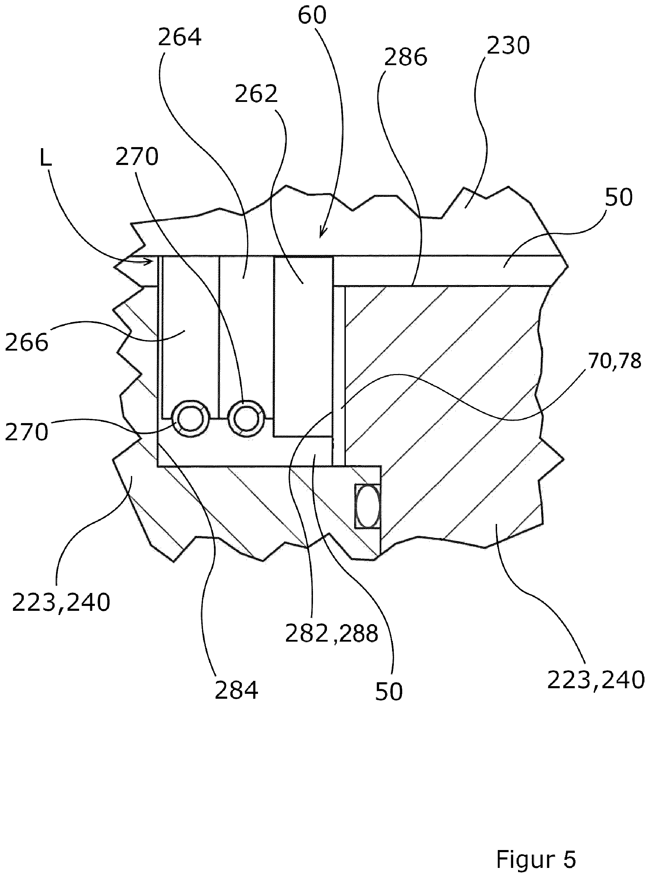

Die Figur 5 zeigt ausschnittsweise einen Kompressor 10, der in Teilen identisch zu dem Kompressor 10 der Figur 3 ist. Der Kompressor 10 weist ein Packungsgehäuse 220 als stationäres Teil 20 und eine Kolbenstange 230 als oszillierendes Teil 30 auf. Die Kolbenstange 230 oszilliert relativ zu dem Packungsgehäuse 220 entlang einer Hauptachse X zwischen einer Hochdruckseite H und einer Niederdruckseite N.

Das Packungsgehäuse 220 umfasst mehrere Kammerscheiben 240 als Scheibenkörper 40, nämlich eine Grundplatte 222, mehrere Hauptkammerscheiben 223, eine Deckplatte 224 und eine Abschlussplatte 226, die in dieser Reihenfolge entlang der Hauptachse X aneinander angeordnet sind. Die Kammerscheiben 240 weisen jeweils eine Zentralbohrung auf. Die Kolbenstange 230 verläuft durch die Zentralbohrungen. Jeweils zwei benachbarte Kammerscheiben 240 bilden gemeinsam eine Nut 228, die radial nach innen offen ist.

Die Nuten 228 der Kammerscheiben 240 werden teilweise von der Kolbenstange 230 verschlossen. Auf diese Weise bilden die Kammerscheiben 240 und die Kolbenstange 230 mehrere axial hintereinander angeordnete, ringförmig um die Hauptachse verlaufende Kammern 50 aus, wobei zwischen Kammerscheiben 240 und Kolbenstange 230 ein Leckageweg L verbleibt.

Die Kammerscheiben 240 weisen jeweils eine erste Axialfläche 282 und einer bezüglich der Kolbenscheibe 240 gegenüberliegend angeordnete zweite Axialfläche 284 sowie eine innere Radialfläche 286 auf.

In vier der Kammern 50 ist jeweils eine Dichtung 60 angeordnet. Die Dichtungen 60 umfassen jeweils einen Stützring 262, einen Dichtring 264 und einen Deckring 266 (siehe Figur 3A). Der Dichtring 264 und der Deckring 266 werden von Schlauchfedern 270 auf der Kolbenstange 230 gehalten. Bei anderen Ausführungsformen können die Dichtungen 60 auch anders aufgebaut sein und mehr oder weniger Ringe umfassen. Der Stützring 262 berührt die Kolbenstange 230 bei bestimmungsgemäßem Gebrauch nicht, sondern ist zu der Kolbenstange 230 radial beabstandet angeordnet. Durch den von der Hochdruckseite H kommenden Druck wird die Dichtung 60 gegen die erste Axialfläche 282 der Kammerscheibe 240 gedrückt. Die erste Axialfläche 282 bildet dadurch eine Dichtfläche 288 aus. Der Stützring 262 stützt die Dichtung 60 in axialer Richtung an der Kammerscheibe 240 ab.

Der Dichtring 264 liegt an der Kolbenstange 230 an und dichtet somit an dem Leckageweg L ab, er verschließt also den Leckageweg L vollständig oder teilweise.

Im Bereich des Leckagewegs L ist ein Bypass 70 in Form einer Nut 78 vorgesehen, die zwei benachbarte Kammern 50 fluidisch miteinander verbinden. Die Nut 78 verläuft in der ersten Axialfläche 282, die gleichzeitig die Dichtfläche 288 ist. Dabei läuft die Nut 78 in radialer Richtung vollständig durch die Dichtfläche 288. Selbst wenn die Dichtung 60 an der Dichtfläche 288 vollflächig anliegt, bleibt die Nut 78 auf diese Weise offen und bildet einen Bypass 70.

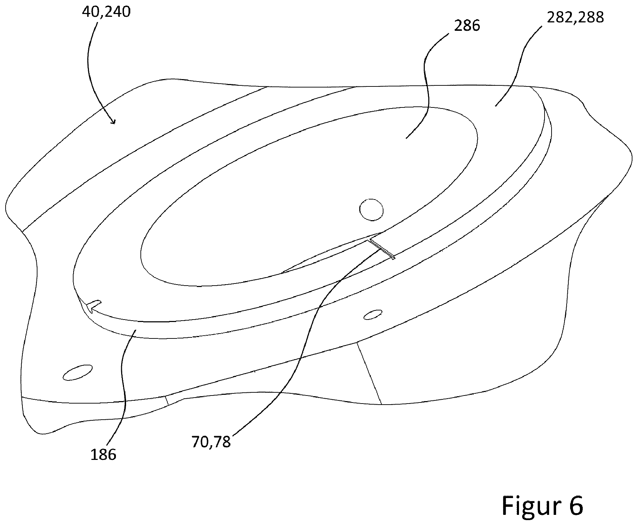

Bei dem Scheibenkörper 40 der Figur 6 handelt es sich um eine Kammerscheibe 240 für einen nicht näher dargestellten Kompressor. Die Kammerscheibe 240 ist ähnlich aufgebaut wie die Kammerscheibe 240 der Figur 5.

Die Kammerscheibe 240 weist eine Zentralbohrung auf, die von einer inneren Radialfläche 286 umschlossen ist. Die Kammerscheibe 240 weist ferner eine erste Axialfläche 282 auf, die gleichzeitig eine Dichtfläche 288 für eine nicht dargestellte Dichtung ist. Bei bestimmungsgemäßem Gebrauch liegt die Dichtung an der Dichtfläche 288 an.

Die Dichtfläche 288 ist an einem axialen Vorsprung der Kammerscheibe 240 angeordnet. Der axiale Vorsprung umfasst eine äußere Radialfläche 186.

Die Kammerscheibe 240 weist einen Bypass 70 in Form einer Nut 78 auf. Die Nut 78 verläuft von der äußeren Radialfläche 186 bis zu der inneren Radialfläche 286. Liegt die Dichtung an der Dichtfläche 288 an, so kann weiterhin Gas durch den Bypass 70 an der Dichtung vorbeiströmen. Die Größe des Bypass 70 ist vordefiniert, wodurch eine gezielte Leckage erreicht wird.

Die Nut 78 verläuft in radialer Richtung, also senkrecht zu einer Hauptachse der Kammerscheibe 240.

### Bezugszeichenliste

- 10: Kompressor
- 20: stationäres Teil
- 30: oszillierendes Teil
- 40: Scheibenkörper
- 50: Kammer
- 60: Dichtung
- 70: Bypass
- 70a: Bypass
- 70b: Bypass
- 70c: Bypass
- 70d: Bypass
- 72: Bohrung
- 74: Drossel
- 76: Lochblende
- 78: Nut

- 120: Laufbuchse
- 122: Gleitfläche
- 130: Kolben
- 132: Grundplatte
- 140: Kolbenscheibe
- 150: Kolbenkörper
- 152: Kern
- 154: Vorsprünge
- 156: Nut
- 160: Kolbenring
- 182: erste Axialfläche
- 184: zweite Axialfläche
- 186: äußere Radialfläche

- 220: Packungsgehäuse
- 222: Grundplatte
- 223: Hauptkammerscheibe
- 224: Deckplatte
- 226: Abschlussplatte
- 228: Nut
- 230: Kolbenstange
- 240: Kammerscheibe
- 262: Stützring
- 264: Dichtring
- 266: Deckring
- 270: Schlauchfeder
- 272: erste axiale Endfläche
- 274: zweite axiale Endfläche
- 276: radiale Innenfläche
- 278: radiale Außenfläche
- 282: erste Axialfläche
- 284: zweite Axialfläche
- 286: innere Radialfläche
- 288: Dichtfläche

- H: Hochdruckseite
- N: Niederdruckseite
- L: Leckageweg
- X: Hauptachses

## Patentansprüche

1. Kompressor (10) mit einem stationären Teil (20) und einem entlang einer Hauptachse (X) oszillierenden Teil (30) sowie einem zwischen dem stationären Teil (20) und dem oszillierenden Teil (30) in axialer Richtung verlaufenden Leckageweg (L),
wobei zwischen dem stationären Teil (20) und dem oszillierenden Teil (30) mehrere axial hintereinander angeordnete, ringförmig um die Hauptachse (X) verlaufende Kammern (50) definiert sind,
wobei in zumindest einer Kammer (50) eine Dichtung (60) angeordnet ist, die den Leckageweg (L) verschließt oder verkleinert,
wobei mehrere Bypässe (70, 70a,b,c,d) vorgesehen sind, die jeweils zwei Kammern (50) fluidisch miteinander verbinden,
**dadurch gekennzeichnet, dass** von jeweils zwei benachbarten Bypässen (70, 70a,b,c,d) der Bypass (70, 70a,b,c,d), welcher näher an einer Hochdruckseite (H) des Kompressors (10) angeordnet ist, einen Minimalquerschnitt M aufweist, der kleiner dem Minimalquerschnitt M des Bypasses (70, 70a,b,c,d) ist, welcher näher an einer Niederdruckseite (N) des Kompressors (10) angeordnet ist.

2. Kompressor (10) nach Anspruch 1,
**dadurch gekennzeichnet, dass** das stationäre Teil (20) eine Laufbuchse (120) und das oszillierende Teil (30) ein Kolben (130) ist oder dass das stationäre Teil (20) ein Packungsgehäuse (220) und das oszillierende Teil (30) eine Kolbenstange (230) ist.

3. Kompressor (10) nach Anspruch 1 oder 2,
**dadurch gekennzeichnet, dass** der Bypass (70, 70a,b,c,d) zwei unmittelbar benachbarte Kammern (50) fluidisch miteinander verbindet.

4. Kompressor (10) nach einem der vorhergehenden Ansprüche,
**dadurch gekennzeichnet, dass** der Bypass (70, 70a,b,c,d) einen Minimalquerschnitt M < 2 mm² aufweist.

5. Kompressor (10) nach einem der vorhergehenden Ansprüche,
**dadurch gekennzeichnet, dass** der Bypass (70, 70a,b,c,d) in dem stationären Teil (20) oder dem oszillierenden Teil (30) oder in der Dichtung (60) vorgesehen ist.

6. Kompressor (10) nach einem der vorhergehenden Ansprüche,
**dadurch gekennzeichnet, dass** der Bypass (70, 70a,b,c,d) zusätzlich zu dem Leckageweg (L) vorgesehen ist.

7. Kompressor (10) nach einem der vorhergehenden Ansprüche,
**dadurch gekennzeichnet, dass** der Bypass (70, 70a,b,c,d) von zumindest einer Bohrung (72) gebildet wird.

8. Kompressor (10) nach einem der Ansprüche 2 bis 7,
**dadurch gekennzeichnet, dass** der Kolben (130) oder das Packungsgehäuse (220) mehrere Scheibenkörper (40) aufweisen, die in axialer Richtung hintereinander angeordnet sind, wobei die Scheibenkörper (40) eine erste Axialfläche (182, 282) und eine bezüglich des Scheibenkörpers (40) gegenüberliegend angeordnete zweite Axialfläche (184, 284) sowie eine Radialfläche (186, 286) aufweisen und wobei die Bohrung (72) zwischen der ersten Axialfläche (182, 282) und der Radialfläche (186, 286) und/oder zwischen der ersten Axialfläche (182, 282) und der zweiten Axialfläche (184, 284) verläuft.

9. Kompressor (10) nach Anspruch 7 oder 8,
**dadurch gekennzeichnet, dass** die Bohrung (72) zumindest abschnittsweise parallel zur Hauptachse (X) verläuft.

10. Kompressor (10) nach einem der Ansprüche 7 bis 9,
**dadurch gekennzeichnet, dass** der Kolben (130) einen zylindrischen Kern (152) und eine Mehrzahl von ringförmigen, umfänglich um den Kern (152) verlaufenden Vorsprüngen (154) aufweist, und dass die Bohrung (72) zumindest abschnittsweise durch den Kern (152) verläuft.

11. Kompressor (10) nach einem der Ansprüche 1 bis 5,
**dadurch gekennzeichnet, dass** der Bypass (70, 70a,b,c,d) im Bereich des Leckagewegs (L) vorgesehen ist.

12. Kompressor (10) nach Anspruch 11,
**dadurch gekennzeichnet, dass** der Bypass (70, 70a,b,c,d) eine Nut (78) ist, wobei der Kolben (130) oder das Packungsgehäuse (220) mehrere Scheibenkörper (40) aufweisen, die in axialer Richtung hintereinander angeordnet sind, wobei die Scheibenkörper (40) eine Dichtfläche (288) aufweisen und wobei die Nut (78) in der Dichtfläche (288) verläuft.

13. Kompressor (10) nach einem der Ansprüche 7 bis 12,
**dadurch gekennzeichnet, dass** in der Bohrung (72) oder in der Nut (78) eine Drossel (74) angeordnet ist, welche einen Minimalquerschnitt M des Bypass (70, 70a,b,c,d) definiert.

14. Kompressor (10) nach Anspruch 13,
**dadurch gekennzeichnet, dass** die Drossel (74) eine Einschraubung mit Lochblende (76) ist, welche in die Bohrung (72) eingeschraubt ist, oder dass die Drossel (74) ein Einsatz mit Lochblende (76) ist, der in die Nut (78) eingesetzt ist.

15. Kompressor (10) nach Anspruch 13 oder 14,
**dadurch gekennzeichnet, dass** die Drossel (74) ein poröses Material umfasst.

## Claims

1. A compressor (10) having a stationary part (20), a part (30) oscillating along a main axis (X), and a leakage path (L) extending between the stationary part (20) and the oscillating part (30) in the axial direction,
wherein multiple chambers (50), which are arranged axially in succession and extend annularly around the main axis (X), are defined between the stationary part (20) and the oscillating part (30),
wherein a seal (60), which closes or reduces the leakage path (L), is arranged in at least one chamber (50),
wherein a plurality of bypasses (70, 70a,b,c,d) is provided, which fluidically interconnect two chambers (50), respectively,
**characterised in that** of two respective adjacent bypasses (70, 70a,b,c,d), the bypass (70, 70a,b,c,d) that is arranged closer to a high-pressure side (H) of the compressor (10) comprises a minimum cross-section M, which is smaller than the minimum cross-section M of the bypass (70, 70a,b,c,d), which is located closer to a low-pressure side (N) of the compressor (10).

2. The compressor (10) according to claim 1,
**characterised in that** the stationary part (20) is a sleeve (120) and the oscillating part (30) is a piston (130), or **in that** the stationary part (20) is a packing housing (220) and the oscillating part (30) is a piston rod (230).

3. The compressor (10) according to claim 1 or 2,
**characterised in that** the bypass (70, 70a,b,c,d) fluidically interconnects two immediately adjacent chambers (50).

4. The compressor (10) according to one of the preceding claims,
**characterised in that** the bypass (70, 70a,b,c,d) comprises a minimum cross-section M < 2 mm².

5. The compressor (10) according to one of the preceding claims,
**characterised in that** the bypass (70, 70a,b,c,d) is provided in the stationary part (20), or the oscillating part (30), or in the seal (60).

6. The compressor (10) according to one of the preceding claims,
**characterised in that** the bypass (70, 70a,b,c,d) is provided in addition to the leakage path (L).

7. The compressor (10) according to one of the preceding claims,
**characterised in that** the bypass (70, 70a,b,c,d) is formed from at least one bore (72).

8. The compressor (10) according to one of claims 2 to 7,
**characterised in that** the piston (130) or the packing housing (220) comprises multiple disc bodies (40), which are arranged axially in succession, wherein the disc bodies (40) comprise a first axial surface (182, 282) and a second axial surface (184, 284) arranged opposite the disc body (40), as well as a radial surface (186, 286), and wherein the bore (72) extends between the first axial surface (182, 282) and the radial surface (186, 286) and/or between the first axial surface (182, 282) and the second axial surface (184, 284).

9. The compressor (10) according to claim 7 or 8,
**characterised in that** at least portions of the bore (72) extend parallel to the main axis (X).

10. The compressor (10) according to one of claims 7 to 9,
**characterised in that** the piston (130) comprises a cylindrical core (152) and a plurality of annular protrusions (154) extending circumferentially around the core (152) and **in that** at least portions of the bore (72) extend through the core (152).

11. The compressor (10) according to one of claims 1 to 5,
**characterised in that** the bypass (70, 70a,b,c,d) is provided in the region of the leakage path (L).

12. The compressor (10) according to claim 11,
**characterised in that** the bypass (70, 70a,b,c,d) is a groove (78), wherein the piston (130) or the packing housing (220) comprises multiple disc bodies (40), which are arranged axially in succession, wherein the disc bodies (40) comprise a sealing surface, (288) and wherein the groove (78) extends within the sealing surface (288).

13. The compressor (10) according to one of claims 7 to 12,
**characterised in that** a restrictor (74) is arranged in the bore (72) or in the groove (78), which defines a minimum cross-section M of the bypass (70, 70a,b,c,d).

14. The compressor (10) according to claim 13,
**characterised in that** the restrictor (74) is a screw connection having an aperture plate (76), which is screwed into the bore (72), or **in that** the restrictor (74) is an insert having an aperture plate (76), which is inserted into the groove (78).

15. The compressor (10) according to claim 13 or 14,
**characterised in that** the restrictor (74) comprises a porous material.

## Revendications

1. Compresseur (10), comprenant une partie fixe (20) et une partie (30) oscillant le long d'un axe principal (X), ainsi qu'un trajet de fuite (L) s'étendant dans la direction axiale entre la partie fixe (20) et la partie oscillante (30),
dans lequel plusieurs chambres (50) agencées axialement les unes derrière les autres et s'étendant de manière annulaire autour de l'axe principal (X) sont définies entre la partie fixe (20) et la partie oscillante (30),
dans lequel un joint (60) est agencé dans au moins une chambre (50), lequel obture ou réduit le trajet de fuite (L),
dans lequel plusieurs dérivations (70, 70a, b, c, d) sont prévues, qui relient deux chambres (50) l'une à l'autre de manière fluidique,
**caractérisé en ce que**, sur respectivement deux dérivations adjacentes (70, 70a, b, c, d), la dérivation (70, 70a, b, c, d) qui est agencée plus près d'un côté haute pression (H) du compresseur (10) présente une section transversale minimale M qui est plus petite que la section transversale minimale M de la dérivation (70, 70a, b, c, d) qui est agencée plus près d'un côté basse pression (N) du compresseur (10).

2. Compresseur (10) selon la revendication 1,
**caractérisé en ce que** la partie fixe (20) est une chemise de cylindre (120) et la partie oscillante (30) est un piston (130), ou **en ce que** la partie fixe (20) est un boîtier d'étanchéité (220) et la partie oscillante (30) est une tige de piston (230).

3. Compresseur (10) selon la revendication 1 ou 2,
**caractérisé en ce que** la dérivation (70, 70a, b, c, d) relie fluidiquement deux chambres (50) immédiatement voisines.

4. Compresseur (10) selon l'une des revendications précédentes, **caractérisé en ce que** la dérivation (70, 70a, b, c, d) présente une section minimale M < 2 mm².

5. Compresseur (10) selon l'une des revendications précédentes, **caractérisé en ce que** la dérivation (70, 70a, b, c, d) est prévue dans la partie fixe (20) ou la partie oscillante (30), ou dans le joint (60).

6. Compresseur (10) selon l'une des revendications précédentes, **caractérisé en ce que** la dérivation (70, 70a, b, c, d) est prévue en plus du trajet de fuite (L).

7. Compresseur (10) selon l'une des revendications précédentes, **caractérisé en ce que** la dérivation (70, 70a, b, c, d) est formée par au moins un alésage (72).

8. Compresseur (10) selon l'une des revendications 2 à 7, **caractérisé en ce que** le piston (130) ou le boîtier d'étanchéité (220) présente plusieurs corps de disque (40) qui sont agencés les uns derrière les autres dans la direction axiale, les corps de disque (40) présentant une première surface axiale (182, 282) et une seconde surface axiale (184, 284) agencée à l'opposé par rapport au corps de disque (40), ainsi qu'une surface radiale (186, 286), et l'alésage (72) s'étendant entre la première surface axiale (182, 282) et la surface radiale (186, 286) et/ou entre la première surface axiale (182, 282) et la seconde surface axiale (184, 284).

9. Compresseur (10) selon la revendication 7 ou 8,
**caractérisé en ce que** l'alésage (72) s'étend, au moins par segments, parallèlement à l'axe principal (X).

10. Compresseur (10) selon l'une des revendications 7 à 9, **caractérisé en ce que** le piston (130) présente une âme cylindrique (152) et une pluralité de saillies annulaires (154) s'étendant circonférentiellement autour de l'âme (152), et **en ce que** l'alésage (72) passe au moins par segments à travers l'âme (152).

11. Compresseur (10) selon l'une des revendications 1 à 5, **caractérisé en ce que** la dérivation (70, 70a, b, c, d) est prévue dans la zone du trajet de fuite (L).

12. Compresseur (10) selon la revendication 11,
**caractérisé en ce que** la déviation (70, 70a, b, c, d) est une rainure (78), le piston (130) ou le boîtier d'étanchéité (220) présentant plusieurs corps de disque (40) qui sont agencés les uns derrière les autres dans la direction axiale, les corps de disque (40) présentant une surface d'étanchéité (288) et la rainure (78) s'étendant dans la surface d'étanchéité (288).

13. Compresseur (10) selon l'une des revendications 7 à 12, **caractérisé en ce qu'**un étranglement (74) définissant une section transversale minimale M de la déviation (70, 70a, b, c, d) est agencé dans l'alésage (72) ou dans la rainure (78).

14. Compresseur (10) selon la revendication 13,
**caractérisé en ce que** l'étranglement (74) est un raccord vissé avec diaphragme perforé (76) qui est vissé dans l'alésage (72), ou **en ce que** l'étranglement (74) est un insert avec diaphragme perforé (76) qui est inséré dans la rainure (78).

15. Compresseur (10) selon la revendication 13 ou 14,
**caractérisé en ce que** l'étranglement (74) comprend un matériau poreux.
